Europäisches Patentamt

European Patent Office

Office européen des brevets

(11) Publication number: **0 092 412**
**A2**

## EUROPEAN PATENT APPLICATION

(21) Application number: **83302174.4**

(22) Date of filing: **18.04.83**

(51) Int. Cl.³: **H 01 S 3/091, H 01 S 4/00**

(30) Priority: **19.04.82 JP 63824/82**

(43) Date of publication of application: **26.10.83**
**Bulletin 83/43**

(84) Designated Contracting States: **DE FR GB NL**

(71) Applicant: **HITACHI, LTD., 6, Kanda Surugadai 4-chome Chiyoda-ku, Tokyo (JP)**

(72) Inventor: **Komatsubara, Kiichi F., 18-13, Enoki-cho, Tokorozawa-shi Saitama-ken (JP)**

(74) Representative: **Jackson, John Timothy et al, MEWBURN ELLIS & CO. 2/3 Cursitor Street, London EC4A 1BQ (GB)**

(54) **Device for emitting super fluorescent light.**

(57) The invention relates to a device with one dimensional pseudo reflection layer plate series which is able to emit photon pulses (15) with coherent phase, and a type of quantum standing photon wave oscillation in between the layer plates, by pumping with high energy exciting photons (11).

The device has a series of plates (2) of a fluorescent material, stacked alternately between supporting, light transmissive layers (1). The time taken for the light wave to pass between the supporting layers (1) is set smaller than a time constant of spontaneous emission in atoms of the fluorescent material.

The coherent light emitted can be in the range from visible light to X-rays.

-1-

## DEVICE FOR EMITTING SUPER FLUORESCENT LIGHT

The present invention relates to a lighting device which emits super fluorescent light.

In the present specification, this lighting device shall be tentatively named "Solid Fluoter" (Solid State Super Fluorescent Lighting Device).

Super fluorescent phenomena are interpreted as follows. Certain atoms are excited by pumping with a high energy photon beam, and the resulting atomic level electrons are emitted spontaneously. At this time, photons appear, and they correlate the nearest atoms with each other. The electric dipole moments of the affected atoms interfere simultaneously as a whole, to cause population inversion. In consequence, a coherent photon wave is emitted from a device.

Coherent super fluorescent light has hitherto been observed when passing a high power laser beam through a gas plasma in pulsing fashion.

Examples of such techniques are contained in the following references:

(1) Laser induced Fusion and X-ray laser studies; edited by F.Jacobs, M.Sally and M.Sargant (Addison-Wesley) 1976.

(2) R.Loudon; The quantum theory of light 142 (Clarendon Press Oxford) 1974.

When using a gas plasma, however, the Doppler effect on the evolved light and the direction of the $k$ vector are random, so that the super fluorescent light cannot be derived at a high output level.

If a coherent X-ray source can be realized, progress can be expected in various technologies including, e.g. enhancement in the sensitivity of an X-ray CT.

The present invention is therefore directed to producing coherent super fluorescent light beams by means of solid state devices. Such beams may range from the X-ray region to the visible region.

The inventor proposes a device with one dimensional pseudo reflection layer plate series which is able to emit photon pulses with coherent phase, and has a type of quantum standing photon wave oscillation in between the layer plates, by pumping with high energy exciting photons. Thus the invention provides a device for emitting light comprising a structure in which first material layers emitting a predetermined electromagnetic wave when irradiated with a pumping ray or beam, are stacked with second material layers substantially transmitting the electromagnetic wave, and means for irradiating said structure with the pumping ray or beam, the time taken for the electromagnetic wave to pass between said second material layers being set smaller than a time constant of spontaneous emission in atoms of said first material layers.

The mechanism which allows the emission of an X-ray coherent photon wave pulse is thought to be due to breaching of a dielectric reflection wall formed by the periodic layer plate and release of the standing wave of fluorescence photons in between adjacent walls, as a coherent wave pulse.

The quantum standing wave of fluorescent photons due to pumping of high power exciting photons is formed at a periodic number from the ground state to higher states corresponding to the length between adjacent walls with dielectric constant due to correlation of dipole vector doped atoms with fluorescent field, and the coherency of the interference wave follows Young's rule for the timing of emission of fluorescence photon from atom dipole change of the nearest wall, caused by a high energy pumping photon wave.

The walls are breached by increase of pumping photon number due to the increase of the real part of the dielectric constant in the wall, which causes the evolution of an X-ray coherent pulse.

In the case of visible light, the mechanism for quantum standing wave in between walls is the same as for X-rays.

The preferred structure of the present invention emits an electromagnetic wave such as fluorescence X-rays from fluorescent material layers arranged in a basic transparent material and which establishes the condition that a time $(\ell/c)$ in which the emitted light passes through the inter-space $(\ell)$ between the fluorescent material layers is not greater than a changing time (transition time: $\tau_R$) of an

electron transition moment, namely, $\tau_R \geq \ell/c$. Herein, these times need to satisfy the relationship $\tau_R > \tau_p \geq \ell/c$, where $\tau_p$ is an oscillation time (photon cavity resonance time) of atoms in the whole multi-layer structure.

With such a multi-layer structure of the atoms, no Doppler effect develops in the fluorescent light emitted in response to external pumping light, and the directions of the $\mathbb{k}$ vector are uniform in a unidimensional direction, so that a super fluorescent light beam can be obtained.

The preferred embodiments of the present invention will now be described with reference to the accompanying drawings, wherein:

Figure 1a is a sectional view of a structure with fluorescent wall plates periodically arranged;

Figure 1b is a typical perspective view showing the principle of the wall plate structure;

Figure 2 is a diagram showing the variation of emission power based on population inverted atoms in an atom group, versus the intensity of pumping power;

Figure 3 is a diagram for explaining a photon wave in a layer as based on the change of a dipole vector;

Figure 4 is a diagram showing the relationship of atomic energy levels for considering a rate equation;

Figure 5 is a diagram showing an electron distribution in levels in the case of thermal distribution;

Figure 6 is a diagram showing an inversion distribution in the case of projecting pumping light from outside;

Figure 7 is a diagram showing an electron distribution in the case of correlation due to a wave in the $k_z$ direction;

Figure 8 is a diagram for explaining the state in which the population inversion has been further intensified, so that a standing wave permeates through wall plates to emit coherent light;

Figure 9 is a diagram showing the relationships between several kinds of atoms and the ionization energies thereof;

Figure 10 is a view for explaining a lighting device according to the present invention; and

Figures 11 and 12 are views similar to Figure 1a, but showing alternative wall plate structures.

Figure la is a sectional view showing a typical example of a layered fluorescent atom wall structure in the basic solid for emitting a coherent photon wave by pumping (hereinbelow, also termed "layered structure with fluorescent wall plates periodically arranged"), while Figure lb is a typical perspective view of the layered structure.

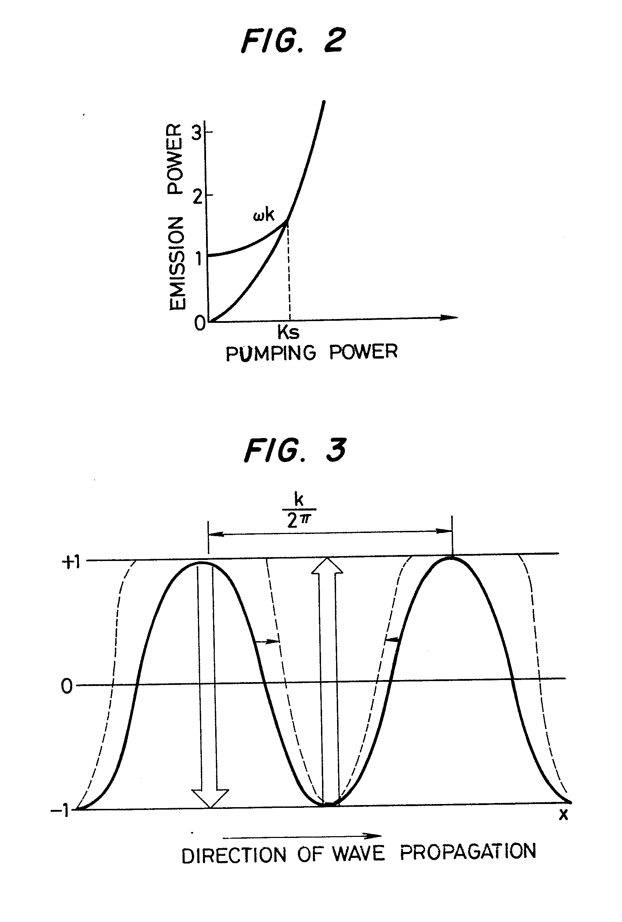

As illustrated in Figures la and lb, when a wall plate 20 is externally irradiated with a high energy pumping X-ray (or pumping electron beam) for excitation, fluorescent atoms (or molecules) 21 contained in the wall plate at a density $N_s = \frac{1}{r^3}$ cm$^{-3}$ are excited, and the transition of electrons from the excited level brings certain electrons of the whole atom group into photon emission. As one result of an energy correlation change based on the emitted photon wave and the dipole shift of the atoms, the natural frequency shift of the fluctuation of a populated electron density within the atom group deviates from $\omega_p$ (the frequency of a lone photon field) at $K = K_c$ ($K_c$ denotes Landau damping), and a term proportional to a wave number vector $k^2$ based on a standing wave develops, as shown by a curve in Figure 2. That is:

$$\omega_k^2 = \omega_p^2 + \frac{3\mu E}{m} k^2$$

$\mu$ denotes the energy of dipole oscillation. Here, the oscillation frequency $\omega$ of the group is the frequency of the photons for $K < K_c$.

Figure 3 shows a waveform indicative of the dipole variation +1 to -1 of the atoms, and the condition of the correlation between the photon wave and the dipole becomes:

$$\omega = k \cdot v$$

Here, $$\tau_R = \frac{2\pi}{\omega} = \frac{2\pi}{k \cdot v}$$

$$v = \frac{r}{\tau_s}$$

$r$ denotes the interval of the atoms, and $\tau_s$ the time constant of the natural emission. Due to the pumping light (X-ray), the electron distribution undergoes population inversion. Then, the following holds:

$$\tau_R = \frac{2\pi}{k} \frac{\tau_s}{r} = \frac{2\pi}{k \cdot c} \frac{\tau_s}{(\frac{r}{c})}$$

Thus,

for the inversion case $K < K_c$, $\quad \tau_R = \frac{\tau_s}{(\frac{r}{c})} \cdot \tau_p$

for the lone excitation case, $\quad \tau_R \rightarrow \tau_s$

Accordingly, the oscillations of the group proceed in the range:

$$k^2 < \lambda_D^{-2}$$

$\lambda_D = c\,\tau_p$ holds, and it is the screening length of the overlapping photon field of the dressed atoms.

When $\tau_p$ is made equal to $\tau_{co}$, the time constant $\tau_R$ of the change of the atom group from the ground state to the excited state in the range of $\lambda_D$ is expressed as:

$$\tau_R = (\frac{\tau_{co}}{(\frac{r}{c})}) \cdot \tau_s$$

where c is the velocity of light, $3 \times 10^8$ m/sec. Assuming $\ell = 100 \overset{\circ}{A}$ and $r = 3 \overset{\circ}{A}$,

$$\tau_R \approx 10^{-7} \text{ to } 10^{-6} \text{ sec}$$

$$\tau_{co} \approx 10^{-8} \text{ to } 10^{-7} \text{ sec}$$

The time constant of the natural emission, $\tau_s = \frac{3}{4}\frac{h\ c^3}{\omega^3\ \mu^2}$

$= 10^{-17} - 10^{-18}$ (X-ray)

For the correlated wall atoms, $\tau_\ell = \frac{\ell}{c} = 3 \times 10^{-17}$ sec

Photon velocity time between the atoms of the plate,

$\tau_a = \frac{r}{c} = 1 \times 10^{-18}$ sec

$$\tau_R > \tau_{co} > \tau_s > \tau_\ell > \tau_a$$

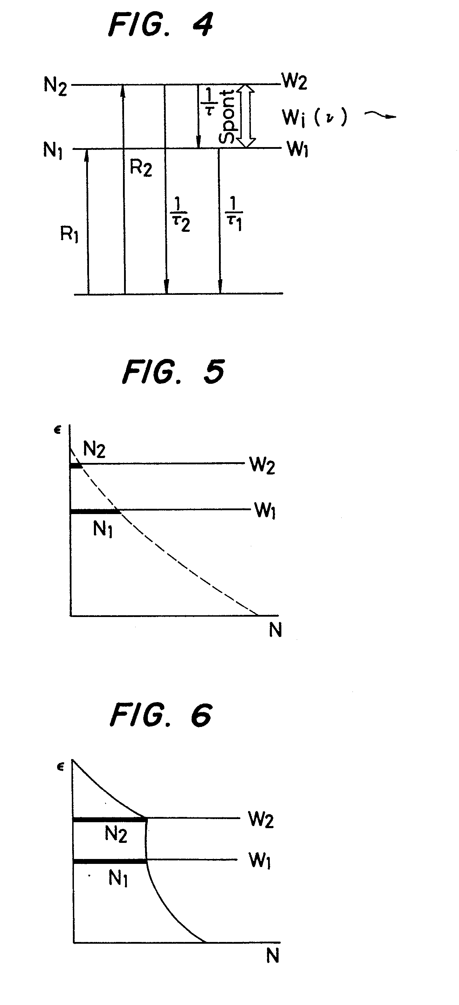

Under such conditions, the interaction between the wall plates will now be considered. To this end, a rate equation as indicated in Figure 4 is considered. Letting $N_2$ and $N_1$ denote the high level electron density and low level density for the level transition of the atoms, respectively, the following holds in the stationary state:

$$N_2 - N_1 = \frac{\left[ R_2 \, \tau_{20} - (R_1 + \dfrac{\tau_{20}}{\tau_{spont}} R_2) \, \tau_1 \right]}{1 + \left[ \tau_{20} + (1 - \dfrac{\tau_{20}}{\tau_{spont}}) \tau_1 \right] W_i(\nu)}$$

In case of thermal distribution, $N_1$ and $N_2$ become:

$$N_2 - N_1 = (R_2 \, \tau_{20} - R_2 \, \tau_1) < 0$$

and an electron distribution as shown in Figure 5 is established. When the pumping X-ray (light) is provided externally, the number of excited electrons and the number of ground electrons in the wall plate become as shown in Figure 6. That is:

$$R_2 \, \tau_p \, (1 - \frac{\tau_1}{\tau_s}) \approx 0, \qquad \tau_s \geq \tau_1$$

$N_2 - N_1 = 0$ holds, and the numbers of the electrons of the excited and ground levels are equal within the atom group in the layer of the device.

When the wall plates interact with each other owing to the wave of the X-ray in the direction $k_z$, the following holds

$$N_2 - N_1 = \frac{R_2 \left[ (1 - \dfrac{R_1}{R_2}) \, \tau_{20} - \dfrac{\tau_{20}}{\tau_s} \, \tau_1 \right]}{1 + \left[ (\tau_{20} + \tau_1) - \dfrac{\tau_{20}}{\tau_s} \, \tau_1 \right] W_i(\nu)}$$

For $W_i(\nu) > 0$

$(W_i(\nu) = f$ (emission) x transition probability $(1 + (1 - f)$ absorption)),

$$N_2 - N_1 \approx \frac{R_2}{\dfrac{1}{\tau_{plas}} + n \dfrac{2\pi \mu^2}{\varepsilon_0 h^2 v} \displaystyle\int_0^\infty h\nu\, m(\nu)\, g(\nu)\, d(\nu)}$$

and $\qquad N_2 - N_1 > 0$

$$\tau_p > \tau_{co} > \tau_s \geq \tau_1$$

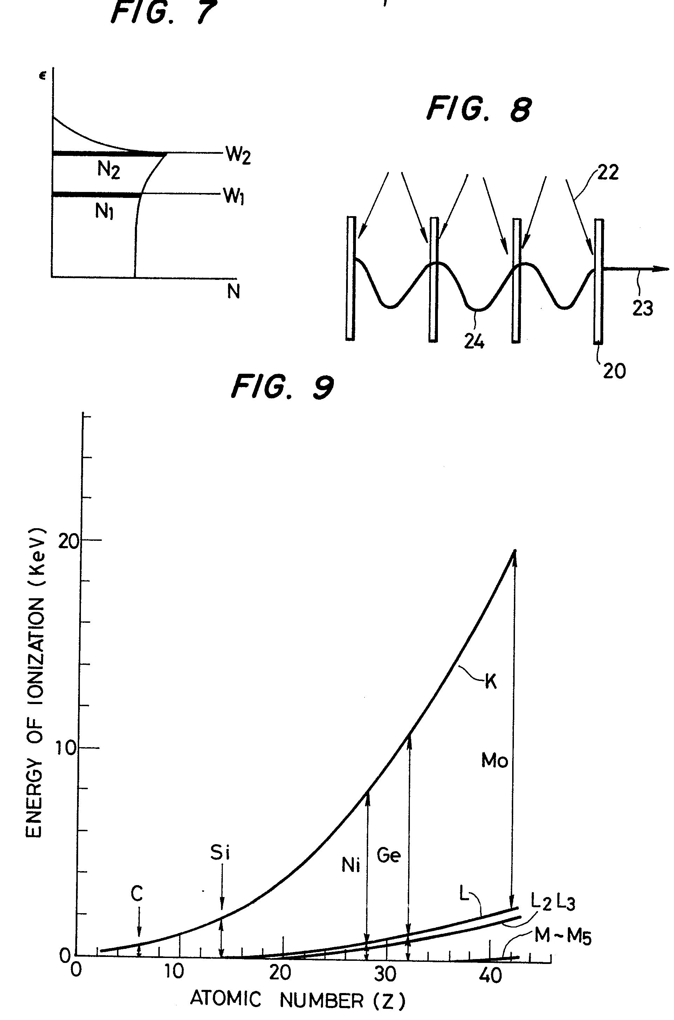

At this time, the electron distribution exhibits population inversion as shown in Figure 7.

However, when the number of photons is large, $W_i(\nu)$ $\approx \int_0^\infty h\nu\, m(\nu)\, g(\nu)\, d(\nu)$ becomes a large value, and

$$N_2 - N_1 = 0$$

holds. Accordingly, the population inversion disappears. However, when the number of photons $N_p$ is greater than the density of atoms $N_s$ of the wall plate, the photon oscillations between the wall plates become a standing wave 24 as shown in Figure 8, in which numeral 20 indicates each wall plate and numeral 22 pumping by a high energy photon beam. Accordingly, the dielectric function $\theta$ approximates 1 (unity), and coherent light 23 is emitted by super evolution. The conditions of the super evolution are:

$$2\pi N_s \mu^2 < h\, w_p$$

$$\mu = e^\varepsilon$$

$$W \tau_R > 1$$

As exemplified in Figure 8, the least number of photons of the standing wave fulfills, in a certain half wavelength
region, the following conditions:

$$2 \pi N_s \mu^2 > h \omega$$

$$\omega \tau_R < 1$$

This wave is very stable. It causes the dressed field
at the correlated level of the atom group based on the
superposition of the ground states. The lifetime is
long, and the output of the evolved wave is of great power.

The layered structure with the fluorescent wall
plates periodically arranged, is externally irradiated with,
e. g., an electron beam 9 as pumping light in a direction
parallel to the planes of fluorescent material layers
2 and support members 1. The electron beam is projected
on a layer of Zn, Mn or the like (hereinbelow, tentatively
named "radiant layer for pumping"), to generate high
energy X-rays for excitation. The X-rays are used as
pumping light for the fluorescent material layers 2.
The energy of the pumping X-rays needs to be set at
a level at which the X-rays can penetrate through the
supporting layer 1 and can pump the fluorescent material
so as to radiate fluorescent X-rays. That is, letting
$E_{ex}$ denote the energy of the pumping light, the relationship
among $E_s$, $E_f$ and $E_{ex}$ is so selected as to be $E_{ex} > E_f > E_s$.
Here, $E_f$ denotes the energy of the radiant fluorescence,

and $E_s$ the excitation energy for atomic level of the material of the supporting layer.

The pumping light need not always be obtained by irradiating Zn or the like with the electron beam. Insofar as the energies of the pumping light etc. satisfy the aforementioned condition, it is of course possible to directly use, e. g., a laser beam, X-ray beam or electron beam as the pumping light. Concrete examples will be described in detail in embodiments later.

The thickness of the fluorescent material layer 2 is preferably chosen so as to minimize the change of the phase difference of radiation within this layer. Usually, a transparent glass layer is set at a thickness of $10^4$ $\overset{o}{A}$, which is approximately 10 times greater than an emission wavelength nearly equal to 1000 $\overset{o}{A}$. A thickness of, at least, about 4000 $\overset{o}{A}$ will be necessary for this layer.

The thickness of the supporting layer 1 is so set that the arrival time of the radiation ($l/c$) becomes smaller than the transition time ($\tau_R$) of the levels of fluorescent material atoms. This is to be understood from the principle of the present invention stated before. Regarding the minimum thickness, the supporting layer may well be a monatomic layer as long as the function thereof is effected.

While the fluorescent material layers are usable up to about 100 layers, they are ordinarily used up to about 20 layers.

The length of the wall plate structure 10 in the direction of incidence of the pumping light is such that stable photon emission can be caused. This length is not a very important factor in the present device, Solid Fluoter, and a very great length is meaningless.

The energy of X-ray photons 10 produced from the fluorescent material layer 1 under the aforementioned conditions affect the transition moments of the atoms of the adjacent fluorescent material layers in succession as typically illustrated in Figure 2. Typically, the situation is as exemplified below.

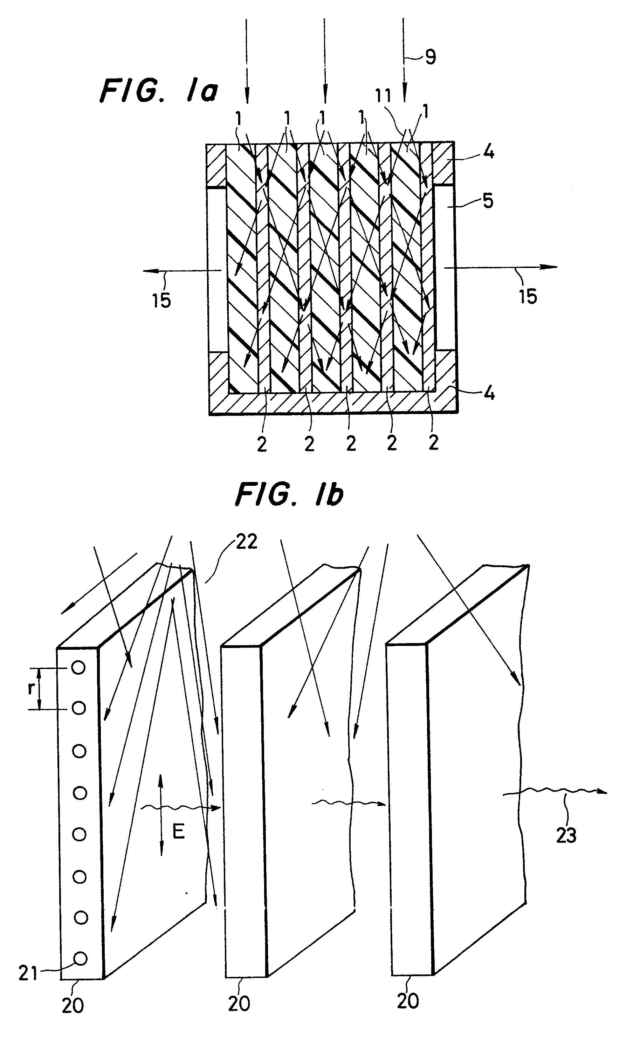

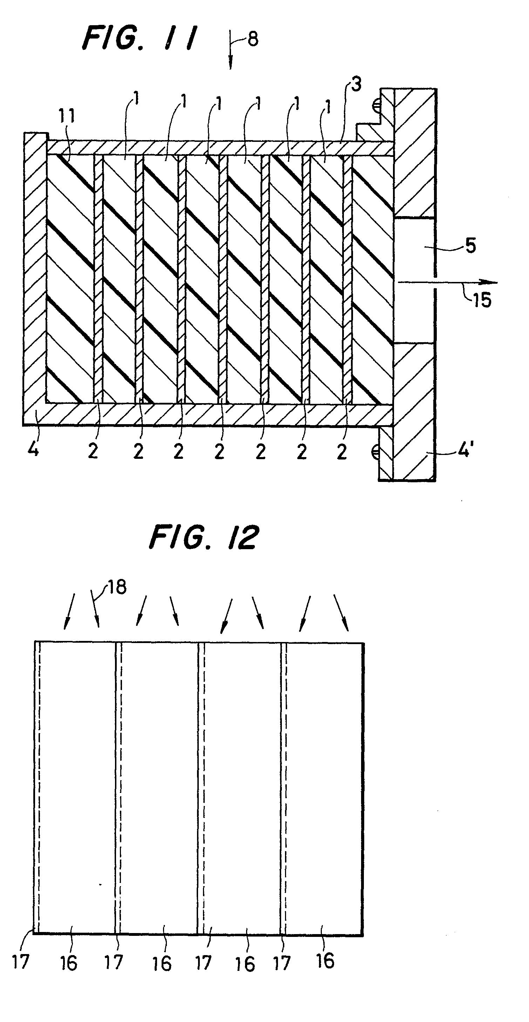

Numeral 11 in Figure 1a denotes the X-rays which the radiant layer for pumping has generated when irradiated with the pumping light 9. The X-rays 11 reach the fluorescent material layer 2, and generate the fluorescence X-rays 10 in, e. g., a place 12. Owing to these fluorescence X-rays 10, the fluorescent material layer 2 generates the fluorescence X-rays 10 in, e. g., a place 13. While, in Figure 1a, the pumping radiant layer is not illustrated, an example thereof is as shown in Figure 11. In this manner, the transition moments of the atoms affect one another, the time constant of the transition distribution of the natural emission of the individual atoms changes, and the electrons of all the atoms at the atomic levels are unified into the state of population inversion reverse to the Boltzmann distribution. Accordingly, the natural emission of the individual atoms tunes all the atoms so as to cause super fluorescent light of high power in the state of coherence.

Ni is used as the material which produces the fluorescence X-rays, Si as the supporting material which is transparent to the propagation of the X-rays, and Mo as the material which produces the exciting X-rays for pumping the fluorescent material, and a pulse electron flow of about 20 keV - 30 keV of the order of picoseconds is emitted to the Mo material. Thus, exciting X-rays having a time constant smaller than $\frac{2\pi}{\omega_p} \approx \tau$ where $\omega_p$ denotes the plasma oscillation frequency of the electromagnetic wave of the fluorescence X-rays of the Ni are produced from the Mo, to give rise to coherent X-rays in the spaces between the layers. The rate equation of the coherent X-rays is as has been explained with reference to Figures 4 to 8. When the number of photons has increased, the super evolution conditions are established, and coherent pulse X-rays of high energy are generated as illustrated in Figure 8. The intensities of the coherent states of the X-rays differ among the inter-layer spaces in which the fluorescence X-rays are emitted.

The energies of the shells K, L, M etc. of the materials Si, Ni and Zn have values as indicated in Figure 9. Fine solid lines indicate the energies of the exciting X-rays, which pump to generate fluorescence X-rays in senses ↕. The energy difference between the K and L levels of the Si is great for the fluorescence X-rays, and this material is transparent with respect to the same. The axis of abscissas in Figure 9 represents the atomic number.

As understood from the above description, the device of the present invention dispenses with a mirror for causing the feedback of light as in conventional laser devices.

In addition, the output intensity (I) is expressed as follows:

$$I_N \ (\vec{k}, \ t) = I \ (\bar{k}, \ 0) \ \left\{ \frac{N}{2} \ (1 - f^2) - \frac{N^2}{2} \ f^2 \right.$$

$$\left. \left[ \exp \ (i \ (K - K_0)) \cdot r \ \exp \ (\frac{2}{\Delta t} \ t) - \frac{1}{N} \right] \right\}$$

where $\underline{f}$ denotes the ratio of population inversion, N the number of photons, and I (k, 0) the natural output of one atom.

The first term of the equation expressive of the output intensity indicates the spontaneous emission, and the second term the super fluorescence output of the square of the number N of photons resulting from the interaction between the atoms.

While the above description has referred to soft X-rays as an example, super radiant lighting devices on the principles described can satisfactorily emit radiations ranging from hard X-rays of approximately 1 $\overset{o}{A}$ to at least visible light of the order of 10000 $\overset{o}{A}$.

At the higher energy end of this range, production of coherent radiation is limited by the inter-layer distance of the fluorescent material layers in accordance with the lifetime of the transition of the electronic levels of the excited atoms. The number (n) of the fluorescent material layers causing the interaction between the atoms of the fluorescent material decreases. Therefore, the lifetime ($\tau_R$) of the radiation stated before shortens, resulting in a lower output intensity.

On the other hand, the limitation at the lower energy end of the range is a result of the absorption of the radiation by the supporting material and the time constant of lattice vibration. More specifically, the lattice vibration of the supporting material is usually of $10^{-12} - 10^{-11}$ sec. The radiation has its energy absorbed and is scattered. Accordingly, the interaction between the atoms intended in the present invention fails to be accomplished.

In this manner, the emission is possible from the X-ray region to the infrared region.  As regards the infrared region, however, the interspace between the wall plates needs to be widened for the above reason, and difficulty is involved in the fabrication.

Typical examples of the pumping means, the fluorescent material and the supporting material are listed in Table 1.

Table 1

| Emitted Radiation | Exciting Means | Fluorescent Material | Supporting Material | Emission Wavelength |
|---|---|---|---|---|
| X-rays | Electron beam, X-rays from Mo, Mn, Fe etc. | Ni | Si | 1.5 Å |
| | | Na | C | 2 Å |
| Visible radiation | Electron beam, Ruby laser | CdS | ZnS | 4900 Å |
| | | CdTe | ZnTe | 7900 Å |
| | Ruby laser, X-rays, Electron beam | GaAs | GaP | 8300 Å |
| | | InSb | InAs | 3100 Å |
| | Laser, Electron beam, X-rays | $Nd^{3+}$ | glass | 1.09 $\mu$m |
| | | $Ni^{2+}$ | $MgF_2$ | 1.62 - 1.84 $\mu$m |
| | | $Ni^{2+}$ | $MnF_2$ | 1.92 $\mu$m |

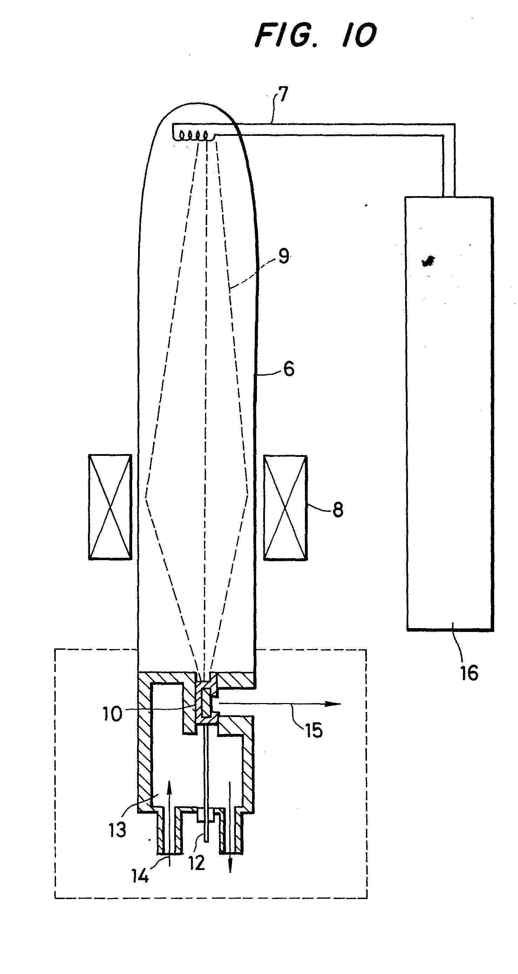

Figure 10 is a model diagram showing the principle setup of a "Solid Fluoter" exemplifying the present invention. Numeral 6 designates an envelope, the interior of which is held at a vacuum of approximately $10^{-8}$ Torr, in other words, as in ordinary vacuum tubes. A wall plate structure 10 is disposed at one end of the envelope 6. Naturally, this wall plate structure is so installed that a direction parallel to the planes of the fluorescent material layers and supporting material thereof agrees with the direction of incidence of pumping light. Numeral 7 indicates exciting means source which is, for example, an electron beam source. The distance between the exciting means source 7 and the wall plate structure 10 is set at about 30 cm. A focusing coil 8 is provided in order that the electron beam 9 from the electron beam source may be converged on the wall plate structure 10. When using a laser beam or the like, it may be condensed by a mirror or the like. As stated before, exciting means other than an electron beam source, such as an X-ray source or a laser device, may be used in conformity with the arrangement of the wall plate structure.

A pulse current generated by a capacitor bank 16 is used as a power supply for the electron beam source, and the wall plate structure is irradiated with an electron flow of 20 keV - 30 keV. The wall plate structure is

-20-

cooled in        liquid air in order to prevent the wall plate from melting.  Numeral 12 indicates an electrode which is connected to the wall plate structure, and numeral 13 cooling means.  Arrows 14 indicate the stream of the coolant.

The "Solid Fluoter" thus constructed can produce a super fluorescent light beam 15.

Embodiment 1:

There will be explained an example which employs a monatomic layer of Ni as a fluorescent material and Si as a supporting material.  Figure 11 is a sectional view of a wall plate structure.  On a silicon substrate 11 having an area of 10 mm x 10 mm and a thickness of 0.5 mm, fluorescent material layers 2 and supporting material layers 1 are alternately stacked.  By way of example, the fluorescent material was Ni, and its thickness was equivalent to a monatomic layer, while the supporting material was Si, and its thickness was controlled to 50 $\overset{o}{A}$.  The fluorescent material layers 2 were stacked into 10 layers.  The respective layers were formed by the well-known molecular-beam epitaxial growth method.  Conventional vacuum evaporation may be resorted to for some thicknesses of the layers.

A Zn or Mn plate 3 having a thickness of 10 $\overset{o}{A}$ is mounted perpendicularly to the side surfaces of the respective layers of the lamination prepared as stated above.

The wall plate structure thus constructed is set in frames 4 and 4' made of lead, as illustrated in the figure. Lead is favorable because it has the action of preventing X-rays from coming out. A window 5 for deriving a super fluorescent light beam is a circular opening having a diameter of 3 mm. This wall plate structure is installed on the envelope 6 as shown in Figure 10.

When a pulsing electron flow of about 30 keV is projected on Mo, Ni atoms are irradiated with X-rays having energy of 20 keV, and plasma oscillations arise in the layers in which the Ni atoms are contained.

The theoretical intensity of coherent emission X-rays is evaluated by a rate equation. The quantum number of exciting X-rays is less than 5 % of the number of electrons. When the electron flow is of 20 keV·1 $\mu$sec, the pulsing coherent X-rays continue for 1 millisec and have photons in a number approximately equal to $\frac{1}{1000}$ of the number of input electrons.

Embodiment 2:

There will be explained an example which employs a crystal of CdS or GaAs as a fluorescent material and which produces visible super fluorescence.

This embodiment has a fundamental structure similar to that of Figure 1. Fluorescent material (CdS) layers 2 and supporting material (ZnS) layers 1 are alternately stacked on a ZnS substrate having an area of 10 mm x 10 mm

By way of example, the fluorescent material layer 2 was 5 $\overset{o}{A}$ thick, and the supporting material layer 1 was 15.5 $\mu$m thick. The fluorescent material layers were stacked into 10 layers.

The fluorescent material layers and the supporting material layers were formed by the molecular-beam epitaxial growth.

In this case, the pumping radiant layer 3 is unnecessary unlike the case of Embodiment 1. Using a ruby laser as a pumping light source, a laser beam having a wavelength of 1.55 $\mu$m may be directly projected on the wall plate structure. The laser needs to have such an intensity that photons produced by the transition between energy levels in the Frenkel exciton cause plasma oscillations. An intensity of approximately 70 watts is used.

When the examples of the fluorescent material, supporting material and exciting means as listed in Table 2 were used instead, predetermined super fluorescent light beams could also be obtained.

In general, the thickness of the supporting layer is set at about $\frac{1}{2}$ - 10 times of the emission wavelength.

Table 2

| | Fluorescent material layer | | Supporting layer | | Exciting means | | | Emission Wavelength Å |
|---|---|---|---|---|---|---|---|---|
| | Material | Thickness | Material | Thickness | Means | Wavelength | Intensity | |
| 1 | CdTe | 5 Å | ZnTe | 15800 Å | Glass laser | 1 μm | 200 Mwatts | 7900 |
| 2 | GaAs | 5 Å | GaP | 16600 Å | Argon laser | 5200 Å | 10 mwatts | 8300 |
| 3 | InSb | 5 Å | InAs | 6200 Å | Argon laser | 7700 Å | 10 mwatts | 3100 |

Embodiment 3:

A wall plate structure can also be realized by employing a glass plate, $MgF_2$, $MnF_2$ or the like for a supporting layer and forming the surface of the supporting layer with an $Nd^{3+}$ or $Ni^{2+}$ ion-containing layer as a fluorescent material layer.

The fundamental structure of the wall plate structure in the present embodiment is as shown in Figure 12.

The surface of a quartz glass plate 16 having a diameter of 10 cm and a thickness of $10^4$ $\overset{\circ}{A}$ is diffused with $Nd^{3+}$ ions, to form an $Nd^{3+}$ layer 17. In diffusing the ions, Nd is evaporated on the glass surface, whereupon the glass is heated to diffuse Nd thereinto. The density of the Nd ions is approximately $10^{21}/m^3$.

In general, the thickness of each glass plate is preferably set at (wavelength) x (1 - 10) or so.

Ten glass plates 16 thus prepared are so stacked that the $Nd^{+3}$ layers 17 and the bodies of the glass plates 16 are alternately arrayed, and they are mounted on frames 4 and 4' as in Figure 11. In this embodiment, the pumping radiant layer 3 as in the embodiment of Figure 11 is unnecessary. Pumping light 18 is directly projected on the wall plate structure. The wall plate structure thus prepared is installed on the envelope 6 as shown in Figure 10. Using an argon laser (0.35 $\mu$m)

or helium neon laser (0.63 $\mu$m) as a pumping light source, a super fluorescent light beam having an emission wavelength of 1.09 $\mu$m could be obtained.

While, in the above example, quartz glass is used for the glass plates, glasses used for, e. g., optical fibers may be used as well. Glass-like plates of $MgF_2$, $MnF_2$ etc. may be used as supporting members.

When the examples of the diffusant ions for the fluorescent material, supporting material and exciting means (light or electron beam excitation) as listed in Table 3 were used instead, predetermined super fluorescent light beams could also be obtained.

· Table 3

| | Supporting Material (Glass) | | Diffused Layer | | | Exciting Means | | | Emission Wavelength ($\mu m$) |
|---|---|---|---|---|---|---|---|---|---|
| | Material | Thickness | Ion | Layer Depth | Density | Means | Electron beam energy | Light intensity | |
| 1 | $MgF_2$ | 1000 Å | $Ni^{2+}$ | 5 Å | $10^{-21}/cm^3$ | Light excitation electron beam | 20 keV | several W | 1.62 - 1.84 |
| 2 | $MnF_2$ | 1000 Å | $Ni^{2+}$ | 5 Å | $10^{-21}/cm^3$ | Light excitation electron beam | 20 keV | several W | 1.92 |

-27-

CLAIMS

1.    A device for emitting light comprising a structure in which first material layers (2,20,17) emitting a predetermined electromagnetic wave when irradiated with a pumping ray or beam (11,22,8,18), are stacked with second material layers (1,16) substantially transmitting the electromagnetic wave, and means for irradiating said structure with the pumping ray or beam (11,22,8,18), the time taken for the electromagnetic wave to pass between said second material layers (1,16) being set smaller than a time constant of spontaneous emission in atoms of said first material layers (2,20,17).

2.    A device according to claim 1, wherein said means for irradiating said structure with the pumping ray or beam comprises a material layer (3) which generates the pumping ray or beam for said structure by receiving a ray or beam (8,9) for excitation    and means (6,7,8) for projecting the ray or beam for excitation.

3.    A device according to claim 1 or claim 2, wherein said first material layers (2) are made of at least one element selected from Ni- and Na, while said second material layers (1) are made of at least one element selected from Si and C.

4.    A device according to claim 1, wherein said first material layers (2) are made of at least one compound selected from CdS, CdTe, GaTe and InSb, while said second material layers (1) are made of at least one compound selected from ZnS, ZnTe, GaP and InAs.

5. A device according to claim 1, wherein said second material layers (16) are made of at least one material selected from glass, $MgF_2$ and $MnF_2$, while said first material layers are made of at least one material selected from Nd and Ni formed in surface regions (17) of said second material layers (16).

6. A device according to any one of the preceding claims, wherein said structure in which said first material layers (2,20,17) and said second material layers (1,16) are stacked is cooled.

7. A device according to any one of the preceding claims, wherein the density of higher level electrons and the density of lower level electrons within an atom group in said structure, for performing transition between the levels, are set substantially equal.

8. A device according to any one of claims 1 to 6, wherein the density of higher level electrons within an atom group in said structure, for performing transition between levels, is set higher than the density of lower level electrons.

**FIG. 1a**

**FIG. 1b**

# FIG. 2

# FIG. 3

DIRECTION OF WAVE PROPAGATION

## FIG. 4

$N_2$ ——————— $W_2$

$\frac{1}{\tau}$

$W_i(\nu)$ ~

$N_1$ ——————— $W_1$

$R_2$

$\frac{1}{\tau_2}$   $\frac{1}{\tau_1}$

$R_1$

Spont

## FIG. 5

$\epsilon$

$N_2$ ———————— $W_2$

———————— $W_1$

$N_1$

$N$

## FIG. 6

$\epsilon$

$N_2$ ———————— $W_2$

———————— $W_1$

$N_1$

$N$

## FIG. 7

## FIG. 8

## FIG. 9

5/6          0092412

FIG. 10

**FIG. 11**

**FIG. 12**